(19)

**Europäisches Patentamt**
**European Patent Office**
**Office européen des brevets**

(11) **EP 4 613 438 A1**

(12) **EUROPEAN PATENT APPLICATION**
published in accordance with Art. 153(4) EPC

(43) Date of publication:
**10.09.2025 Bulletin 2025/37**

(21) Application number: **22964218.6**

(22) Date of filing: **28.11.2022**

(51) International Patent Classification (IPC):
**B25J 9/00** (2006.01)

(52) Cooperative Patent Classification (CPC):
**B25J 9/00; B25J 9/16;** Y02P 90/02

(86) International application number:
**PCT/CN2022/134760**

(87) International publication number:
**WO 2024/092922 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211376272**

(71) Applicant: **Megarobo Technologies Co., Ltd.
Beijing 102200 (CN)**

(72) Inventors:
• **LI, Gang
Beijing 102200 (CN)**
• **HE, Shaohua
Beijing 102200 (CN)**
• **SONG, Mengqi
Beijing 102200 (CN)**

(74) Representative: **Hofmann, Matthias
Boehmert & Boehmert
Anwaltspartnerschaft mbB
Pettenkoferstraße 22
80336 München (DE)**

(54) **ROBOT TEACHING METHOD AND APPARATUS, ELECTRONIC DEVICE, AND STORAGE MEDIUM**

(57) A robot teaching method and apparatus, an electronic device, and a storage medium. The method is used for teaching a robot of which the operation range can cover a plurality of operation stations, wherein the plurality of operation stations are configured to store operation objects. The method comprises: determining target operation stations specified by a user, wherein the target operation stations are some of the plurality of operation stations; teaching the robot on the basis of the target operation stations to obtain a first teaching result; and according to the first teaching result and arrangement information of the plurality of operation stations, obtaining a second teaching result of the other operation stations different from the target operation stations among the plurality of operation stations. After teaching is performed for some of operation stations, a teaching result of the other operation stations can be calculated, thereby effectively reducing the workload of robot teaching and the consumed time, and improving the efficiency of robot teaching.

100

S110 — determining target operation stations specified by a user, in which the target operation stations are some of a plurality of operation stations, and a plurality of motion trajectories of a robot pass through a preset station and take different operation stations among the plurality of operation stations as first endpoints

S120 — teaching the robot to acquire a first teaching result based on the target operation stations

S130 — according to the first teaching result and arrangement information of the plurality of operation stations, acquiring a second teaching result of the other operation stations different from the target operation stations among the plurality of operation stations

**FIG. 1**

## Description

The present application claims the priority to Chinese Patent Application No. 202211376272.2, titled "ROBOT TEACHING METHOD AND APPARATUS, ELECTRONIC DEVICE, AND STORAGE MEDIUM", filed with the China National Intellectual Property Administration on November 4, 2022, the entire content of which is incorporated herein by reference.

## FIELD

The present application relates to the technical field of automatic control, and more particularly, to a robot teaching method, a robot teaching apparatus, an electronic device, and a storage medium.

## BACKGROUND

At present, as the laboratory demands an increasingly higher automation, many devices with different types, different functions and different model specifications have to be involved in one automation process. This requires the handling of materials among different devices, for example, by using robots/robotic arms to perform handling operations.

Taking a sample plate as an example, during a single handling cycle, the robotic arm may need to grab a sample plate from an initial position on one device, and then deliver the sample plate to a target position on the other device. In order to accurately execute the grabbing action and placing action, the robotic arm needs to be taught.

At present, many devices used in the automated workflows are provided with multiple positions for storing the sample plates. For example, a plate station for storing a sample plate tends to have tens of plate positions. In order to enable the robotic arm to accurately grab a sample plate from each of the plate stations in the plate position, the robotic arm needs to be taught about actions to be executed for each plate position. In fact, each grabbing action may include multiple sub-actions, for example, the robotic arm may stay in multiple plate positions. In this way, it is necessary to teach the robotic arm for a large number of sub-actions respectively. In some application scenarios that require relatively high precision for the robotic arm, it is a time-consuming task to teach the robotic arm. When the robotic arm needs to operate at a large number of plate positions, the teaching work for the robotic arm needs a lot of time and effort.

Therefore, a new solution is urgently needed to solve the above technical problems.

## SUMMARY

The present application has been proposed in view of the above problems. The present application provides a robot teaching method, a robot teaching apparatus, an electronic device, and a storage medium.

According to one aspect of the present application, a robot teaching method is provided. The method is used for teaching a robot of which the operation range may cover multiple operation stations and, and the multiple operation stations are used to store operation objects. The method includes: determining target operation stations specified by a user, in which the target operation stations are some of the multiple operation stations, and multiple motion trajectories of the robot all pass through a preset station and different operation stations among the multiple operation stations are taken as first endpoints; teaching the robot based on the target operation stations to acquire a first teaching result; and acquiring a second teaching result of the other operation stations different from the target operation stations among the multiple operation stations based on the first teaching result and arrangement information of the multiple operation stations.

In an embodiment, when acquiring the second teaching result of the other operation stations different from the target operation stations among the multiple operation stations, the method further includes: determining whether the number of the target operation stations that have finished teaching at present meets the requirement of a preset number. If the determination result is yes, acquisition of the second teaching result is allowed; otherwise, acquisition of the second teaching result is prohibited.

In an embodiment, the preset number is determined in advance based on a preset arrangement mode indicated by the arrangement information of the multiple operation stations.

In an embodiment, in a case that the preset arrangement mode is a one-dimensional array, the preset number is greater than or equal to two. In a case that the preset arrangement mode is a two-dimensional array, the preset number is greater than or equal to three.

In an embodiment, in a case that the preset arrangement mode is a one-dimensional array, the target operation stations at least include two operation stations located at two ends of the one-dimensional array.

In an embodiment, in a case that the preset arrangement mode is a two-dimensional array and teaching has been performed for the preset number of target operation stations, the method further includes: determining whether the preset number of target operation stations that have finished teaching are collinear. If the determination result is no, acquisition of the second teaching result is allowed. If the determination result is yes, acquisition of the second teaching result is prohibited.

In an embodiment, in a case that the preset arrangement mode is a two-dimensional array, the target operation stations at least include three of the four operation stations respectively located at an upper left corner, a lower left corner, an upper right corner and a lower right corner of the two-dimensional array.

In an embodiment, that teaching the robot for the target operation stations respectively to acquire the first teaching result includes: for the motion trajectory where each target operation station is located, respectively determining position and pose information of the target operation station and the preset station on the motion trajectory when the robot is respectively located at the target operation station and the preset station on the motion trajectory; determining an intermediate station located between the target operation station and the preset station on the motion trajectory based on the position and pose information of the target operation station and the preset station on the motion trajectory; and acquiring position and pose information of the intermediate station when the robot is located at the intermediate station on the motion trajectory.

In an embodiment, the arrangement information of the multiple operation stations includes index values of the multiple operation stations, the teaching results of the multiple operation stations include position and pose information of all stations on the motion trajectory where the operation station, at which the robot is located, is located, and the position and pose information includes Cartesian coordinate values. Based on the first teaching result and the arrangement information of the multiple operation stations, acquiring a second teaching result of the other operation stations different from the target operation stations among the multiple operation stations includes: converting an Euler angle in the Cartesian coordinate values of each station on the motion trajectory where the target operation stations are located into a rotation vector thereof; based on the three-dimensional coordinate value and the rotation vector in the Cartesian coordinate values of each station on the motion trajectory where the target operation station is located, determining a linear regression formula for each station on the motion trajectory where the other operation stations are located by a multivariate linear regression method, and the linear regression formula includes a formula in which the three-dimensional coordinate value and the rotation vector in the Cartesian coordinate value of the station are related to the index values of the station; based on the linear regression formulas and the index values of the other operation stations, respectively determining three-dimensional coordinate value and a rotation vector in Cartesian coordinate values of each station on the motion trajectory where the other operation stations are located; and determining an Euler angle of each station based on the rotation vector of each station on the motion trajectory where the other operation stations are located.

According to another aspect of the present application, a robot teaching apparatus for teaching a robot of which the operation range may cover multiple operation stations and, and the multiple operation stations are used to store operation objects. The apparatus includes a determination module, a first teaching module, and a second teaching module.

The determination module is configured to determine target operation stations which are specified, where the target operation stations are some of the multiple operation stations, and multiple motion trajectories of the robot all pass through a preset station and take different operation stations among the multiple operation stations as first endpoints.

The first teaching module is configured to teach the robot to acquire a first teaching result based on the target operation stations.

The second teaching module is configured to acquire a second teaching result of other operation stations different from the target operation stations among the multiple operation stations based on the first teaching result and arrangement information of the multiple operation stations.

According to another aspect of the present application, an electronic device having a processor and a memory is also provided. Computer program instructions are stored in the memory, and are used to perform the robot teaching method when they are executed by the processor.

According to another aspect of the present application, a storage medium is also provided, in which program instructions are stored, and the program instructions are used to perform the above robot teaching method when they are executed.

In the above technical solution, the second teaching result of the other operation stations may be acquired based on the first teaching result acquired by the robot teaching. According to the method, after teaching is performed for some of operation stations, a teaching result of the other operation stations can be calculated without specific teaching operations, thereby effectively reducing the workload of robot teaching and the consumed time, and improving the efficiency of robot teaching.

The above description is merely an overview of the technical solutions of the present application, specific embodiments of the present application are described hereinafter, so that technical means of the present application can be more clearly understood and can be implemented according to the content of the specification, and above and other purposes, features and advantages of the present application can be more apparent and understandable.

**BRIEF DESCRIPTION OF THE DRAWINGS**

The above and other objects, features, and advantages of the present application will become more apparent with reference to the detailed description of the embodiments of the present application made in conjunction with the accompanying drawings. The accompanying drawings are intended to provide further understanding of the embodiments of the present application, and constitute a part of the specification. The accompanying drawings are intended to describe the present application in conjunction with the embodiments of the present application, and do not limit the present application. In the accompanying drawings, same reference numerals generally represent same components or steps.

FIG. 1 shows a schematic flowchart of a robot teaching method according to an embodiment of the present application;

FIG. 2 is a schematic flowchart of acquiring a second teaching result of other operation stations different from a target operation station among multiple operation stations according to an embodiment of the present application;

FIG. 3 shows a schematic block diagram of operation stations arranged in a one-dimensional array according to an embodiment of the present application;

FIG. 4 shows a schematic block diagram of operation stations arranged in a two-dimensional array according to an embodiment of the present application;

FIG. 5 shows a schematic flowchart of acquiring a second teaching result of other operation stations different from a target operation station among the multiple operation stations based on the first teaching result and the arrangement information of the multiple operation stations according to an embodiment of the present application;

FIG. 6 shows a schematic block diagram of a robot teaching apparatus according to an embodiment of the present application; and

FIG. 7 shows a schematic block diagram of an electronic device according to an embodiment of the present application.

**DETAILED DESCRIPTION OF THE EMBODIMENTS**

In order to make the objects, technical solutions, and advantages of the present application more apparent, exemplary embodiments according to the present application will be described in detail below with reference to the accompanying drawings. Obviously, the described embodiments are only some of the embodiments of the present application, rather than all the embodiments of the present application. It should be understood that the present application is not limited by the exemplary embodiments described herein. Based on the embodiments of the present application described in the present application, all other embodiments acquired by those skilled in the art without creative efforts shall fall within the protection scope of the present application.

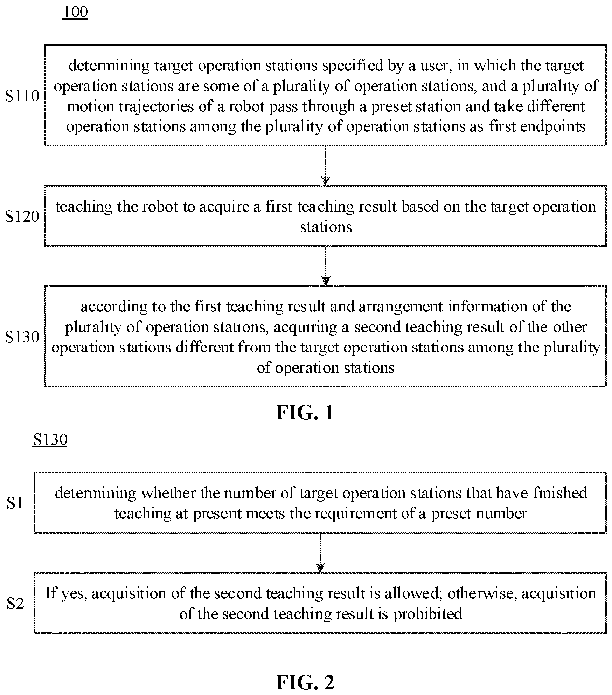

In order to solve the above technical problem, according to one aspect of the present application, a robot teaching method is provided. FIG. 1 shows a schematic flowchart of a robot teaching method 100 according to an embodiment of the present application. As shown in FIG. 1, the method 100 is used for teaching a robot of which the operation range may cover multiple operation stations and, and the multiple operation stations are used to store operation objects. The multiple operation stations can store operation objects. The operation object is an object which the robot can operate. For example, the robot may handle the operation object stored in any one of the multiple operation stations to other position, or the robot may handle the operation object located at other position to any one of the multiple operation stations. The multiple operation stations may all be located on one device. In an embodiment, the device is a plate station in an automated test system. The plate station has multiple plate positions for storing sample plates. Alternatively, the multiple operation stations can be located on different devices. The method 100 may include the following steps.

In step S110, target operation stations specified by a user are determined. The target operation stations are some of the multiple operation stations. Multiple motion trajectories of a robot all pass through a preset station and take different operation stations among the multiple operation stations as first endpoints.

In an example where the aforementioned device is a plate station in an automated test system, the plate station may be provided with multiple towers. The multiple operation stations may be all of the operation stations in one of the towers. The operation stations may be configured for storing operation objects, for example, a sample plate, a culture dish, and the like. The arrangement of the operation stations, that is, the arrangement of the operation stations in the tower, has been set up at a factory. The robot may be a robotic arm for performing a handling operation for an operation object stored in the operation station. Each handling operation performed by the robot may correspond to a motion trajectory. The motion trajectories take different operation stations as the first endpoints respectively. Each of the first endpoint may represent a starting position or an ending position of the robot in performing the handling operation. In addition, the motion trajectory of the robot during handling operation will pass through a same station, that is, a preset station. The preset station is a shared station of multiple motion trajectories, for example, it may be a security station on a particular device in the automated test system. It may be understood that the motion trajectory may further pass through some intermediate stations in addition to the preset station and the operation station. In particular, an intermediate station may be provided for the case where the motion trajectory is relatively long or the robotic arm has a steering operation. The intermediate station may not be a certain operation station in a particular device, but may be any one position that falls within the operation range of the robot in the spatial space. The intermediate station can ensure the accuracy of the motion trajectory.

**In** an embodiment, a host computer may provide a visual interface to the user. Based on the visual interface, the user may use an input device (such as, a mouse, a keyboard, etc.) of the host computer to select the target operation stations among the multiple operation stations. The target operation stations may be some of all operation stations.

**In** step S120, the robot is taught to acquire a first teaching result based on the target operation stations.

**In** an embodiment, any number of target operation stations may be selected among the multiple operation stations based on requirements. The first teaching result can be acquired by teaching the robot with respect to the selected target operation stations. The first teaching result may be understood as coordinate information of each station on the teaching motion trajectory, for example, including the coordinate information of the preset station, the coordinate information of the first endpoints, the coordinate information of the intermediate station, etc.

Specifically, in the teaching process of step S120, for each motion trajectory passing through the target operation stations, the robotic arm may be manually moved to each station on the motion trajectory, so as to determine the coordinate information of each station on the motion trajectory. Alternatively, based on a pre-stored instruction in the host computer, the coordinate information of each station on the motion trajectory may be acquired in response to an operation of the user on the touch screen by means of the host computer. For example, for the foregoing motion trajectory including the intermediate station, position coordinate information of the target operation station, the preset station, and the intermediate station may be acquired through the teaching in step S120.

In step S130, a second teaching result of other operation stations different from the target operation stations among the multiple operation stations is acquired based on the first teaching result and arrangement information of the multiple operation stations.

In an embodiment, the arrangement information of the multiple operation stations may be pre-stored in the host computer system. The arrangement information of the multiple operation stations may include information about the arrangement mode, such as a one-dimensional array or a two-dimensional array. The arrangement information of the multiple operation stations may further include information about the number of the operation stations and a relative position relationship among the operation stations. For example, the arrangement information may include information about the number of the operation stations in each dimension.

Based on the first teaching result acquired in step S 120 and the arrangement information of the multiple operation stations, the motion trajectory of the robot for other operation stations may be calculated, and the calculation result is taken as the teaching result of other operation stations. It can be understood that the first teaching result includes information about the motion trajectory of the target operation stations, and all the motion trajectories pass through the same preset station. Based on the arrangement information of the multiple operation stations, position relationships of other operation stations among the multiple operation stations relative to the target operation station may be determined. Therefore, the motion trajectories of the other operation stations can be determined based on the first teaching result of the target operation stations. Therefore, coordinate information of each station on the motion trajectory passing through the other operation stations is acquired, such as, coordinate information of the other operation stations, the preset station, and the intermediate station.

Based on step S120 and step S130, teaching results of all of the multiple operation stations may be acquired.

In the above technical solution, the second teaching result of other operation stations may be acquired based on the first teaching result acquired by teaching the robot. According to the method, after teaching is performed for some of operation stations, a teaching result of the other operation stations can be calculated without specific teaching operations, thereby effectively reducing the workload of robot teaching and the consumed time, and improving the efficiency of robot teaching.

FIG. 2 is a schematic flowchart of step S130 according to an embodiment of the present application, in which a second teaching result of other operation stations different from the target operation stations among the multiple operation stations is acquired. As shown in FIG. 2, step S130 may include the following steps.

In step S1, it is determined whether the number of target operation stations that have finished teaching at present meets the requirement of a preset number.

In an embodiment, the host computer can pre-determine a preset number of target operation stations for teaching, and by comparing the number of the target operation stations that have finished teaching with the preset number, it is determined whether the number of the target operation stations that have finished teaching at present meets the preset number requirement. For example, there are a total of ten operation stations arranged in a straight line, that is, in a one-dimensional array. The user selects two of them as target operation stations. Based on an instruction from the user, the two target operation stations can be compared with the preset number of the target operation stations for teaching (for a one-dimensional array, the preset number is greater than or equal to two) acquired in advance, and it is obvious that the number of the target operation stations that have finished teaching at present meets a preset number (in this case, the preset number is greater than or equal to two). On the contrary, if the user selects only one of the operation stations for teaching, the number of the target operation stations that have finished teaching at present does not meet the preset number (in this case, the preset number is greater than or equal to two). Alternatively, the user can only specify that the number of the target operation stations for teaching is two in the instruction, and the host computer may determine whether the number of the target operation stations that have finished teaching at present meets the preset number requirement based on the preset number of the predetermined target operation stations and the number of the target operation stations that have finished teaching.

In step S2, if the determination result is yes, acquisition of the second teaching result is allowed; otherwise, acquisition of the second teaching result is prohibited.

In an embodiment, if the number of the target operation stations that have finished teaching currently meets the preset number requirement, the host computer may continue to perform a subsequent operation to acquire a second teaching result of the other operation stations different from the target operation stations. If the number of the target operation stations that have finished teaching currently does not meet the preset number requirement, the host computer system will be prohibited from acquiring the second teaching result of the other operation stations. In this case, the user may continue to select the target operation stations for teaching, until the number of the selected target operation stations meets the preset number requirement. Alternatively, if the number of the target operation stations that have finished teaching currently does not meet the preset number requirement, the host computer may return to the initial state, and continue to perform step S110 to step S130 after the user has re-specified the target operation stations.

According to the above technical solution, it is determined whether the number of the target operation stations that have finished teaching meets the preset number requirement, and then it is determined whether the acquisition of the second teaching result is allowed. In this way, the target operation stations can be customized based on the demands of the user, and the rationality of the selected target operation stations can be ensured, thereby ensuring the effectiveness of the teaching results. Further, smooth execution of the teaching process is ensured.

In an embodiment, the preset number may be determined in advance based on a preset arrangement mode indicated by the arrangement information of the multiple operation stations. It can be understood that the larger the preset number is, the more accurate the second teaching result can be ensured.

In an embodiment, arrangement information of multiple operation stations may be acquired. As described above, the arrangement information may include information about a preset arrangement mode of the multiple operation stations. The preset arrangement mode of the operation stations has been set up at the factory, and may be a one-dimensional array, a two-dimensional array, a three-dimensional array, or the like. For different preset arrangement modes of the operation stations, the preset number of the target operation stations may be correspondingly determined. The more complex the preset arrangement mode is, the larger the preset number can be; and vice versa. For example, if the preset arrangement mode of the operation stations is a one-dimensional array, any two or more of the operation stations may be selected as the target operation stations.

According to the above technical solution, different preset numbers of target operation stations are determined based on different preset arrangement modes of the operation stations. In this way, the scientificity and rationality of the robot teaching process can be ensured, and invalid teaching operations can be reduced, thereby improving the efficiency of the robot teaching.

In an embodiment, determining the preset number of the target operation stations based on the preset arrangement mode indicated by the arrangement information of the multiple operation stations may include following two cases.

In a first case, if the preset arrangement mode is a one-dimensional array, the preset number is greater than or equal to two.

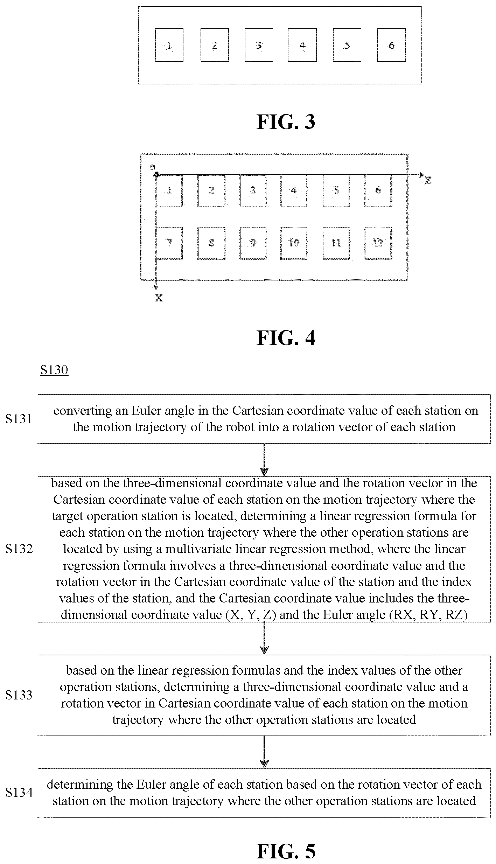

FIG. 3 shows a schematic block diagram of operation stations arranged in a one-dimensional array according to an embodiment of the present application. As shown in FIG. 3, in one embodiment, all operation stations are arranged in a one-dimensional array in the device, that is, all operation stations are collinear. There are six operation stations. At least two of the operation stations may be determined as target operation stations. For example, the operation station 1 and the operation station 3 may be determined as target operation stations respectively.

In a second case, if the preset arrangement mode is a two-dimensional array, the preset number is greater than or equal to three.

FIG. 4 shows a schematic block diagram of operation stations arranged in a two-dimensional array according to an embodiment of the present application. As shown in FIG. 4, in one embodiment, all operation stations are arranged in a two-dimensional array arrangement mode in the device, that is, all operation stations are coplanar. There are twelve operation stations in total. At least three of the operation stations may be determined as target operation stations. For example, operation station 1, operation station 6 and operation station 9 may be determined as target operation stations respectively.

According to the above technical solution, different preset numbers of target operation stations are determined based on different arrangement modes of the operation stations. In this way, the target operation stations can be flexibly selected while the accuracy of teaching can be ensured, thereby improving the scientificity of the teaching process.

In an embodiment, in the case that the preset arrangement mode is a one-dimensional array, the target operation stations at least include two operation stations located at both ends of the one-dimensional array.

Preferably, in the case that the multiple operation stations are all arranged in a straight line, the operation stations located at the two ends of the one-dimensional array may be preferably determined as the target operation stations. Still taking the example shown in FIG. 3 as an example, the operation station 1 and the operation station 6 may be determined as target operation stations respectively. If the preset number of the target operation stations is greater than two, for example, the preset number of the target operation stations is three. Any operation station other than the operation stations at the two ends in the one-dimensional array may be selected as a third target operation station.

According to the above technical solution, in the case that the preset arrangement mode is a one-dimensional array, the operation stations located at both ends are selected as the target operation stations. In this way, it is more accurate for the robot to calculate the second teaching result of the other operation stations based on the first teaching result of the target operation stations, thereby reducing errors.

In an embodiment, in a case that the preset arrangement mode is a two-dimensional array and a preset number of target operation stations (that is, three or more operation stations) that have finished teaching, the method may further include: determining whether the preset number of target operation stations (that is, three or more operation stations) that have finished teaching are collinear. If the determination result is no, acquisition of the second teaching result is allowed. If the determination result is yes, acquisition of the second teaching result is prohibited.

In an embodiment, in a case that the preset arrangement mode is a two-dimensional array and the user has taught three target operation stations, it is also necessary to determine whether the three target operation stations taught by the user are collinear. Referring to FIG. 3 again, in the case that the arrangement mode of the multiple operation stations is a two-dimensional array, that is, the multiple operation stations are all arranged in the same plane, among the twelve operation stations, if the user selects the operation station 1, the operation station 6, and the operation station 9 as the three target operation stations that have finished the teaching, it is determined that the three target operating stations taught by the user are not collinear, that is, the determination result is no. At this time, acquisition of the second teaching result of the other operation stations is allowed. If the user selects the operation station 1, the operation station 2, and the operation station 6 as the target operation stations that have finished the teaching, it is determined that the three target operation stations taught by the user are collinear, that is, the determination result is yes. At this time, acquisition of the second teaching result of the other operation stations is not allowed.

In another embodiment, in a case that the preset arrangement mode is a two-dimensional array and the user has taught more than three target operation stations (for example, four target operation stations), it is also necessary to determine whether the four target operation stations taught by the user are collinear (or whether there are three of the operation stations not collinear among the target operation stations that have finished teaching). Referring to FIG. 3 again, in the case that the arrangement mode of the multiple operation stations is a two-dimensional array, that is, the multiple operation stations are all arranged in the same plane, among the twelve operation stations, the user selects the operation station 1, the operation station 6, the operation station 9 and the operation station 12 as the four target operation stations that have finished teaching. It is determined that the four target operating stations taught by the user are not collinear, that is, the determination result is no. At this time, acquisition of the second teaching result of the other operation stations is allowed. Of course, if the user selects the operation station 1, the operation station 2, the operation station 6 and the operation station 7 as the target operation stations that have finished the teaching, although the operation station 1, the operation station 2 and the operation station 6 are collinear, in addition, there are three of the operation stations not collinear among the operation station that have finished teaching, for example, the operation station 1, the operation station 2 and the operation station 7 are not collinear, so acquisition of the second teaching result of other operation stations is allowed.

According to the above technical solution, in a case that the preset arrangement mode is a two-dimensional array, and a preset number of target operation stations (that is, three or more operation stations) that have finished teaching, it is determined whether the preset number of target operation stations that have finished teaching are collinear, and acquisition of the second teaching result is allowed when they are collinear. In this way, it is more accurate to calculate the second teaching result of the other operation stations based on the first teaching result of the target operation stations, thereby reducing possible errors.

In an embodiment, in a case that the preset arrangement mode is a two-dimensional array, the target operation stations at least include three of the four operation stations respectively located at an upper left corner, a lower left corner, an upper right corner and a lower right corner of the two-dimensional array.

Preferably, in the case that the preset arrangement mode is a two-dimensional array, the three of the four operation stations located at the upper left corner, the lower left corner, the upper right corner and the lower right corner of the two-dimensional array respectively may be determined as the target operation stations. Referring to FIG. 3 again, the operation station 1 located at the upper left corner, the operation station 7 located at the lower left corner, and the operation station 6 located at the upper right corner may be selected as the target operation stations respectively. If the preset number of the target operation stations is greater than three, for example, the preset number of the target operation stations is four. In addition to the three selected target operation stations, namely, the target operation station 1, the target operation station 6 and the target operation station 7, any one of the operation stations may be determined as the fourth target operation station (including the case that the target operation station 12 may be selected as the fourth target operation station).

According to the above technical solution, in a case that the preset arrangement mode is a two-dimensional array, target operation stations for teaching are at least selected from the operation stations located at the four corners. In this way, it is more accurate to calculate the second teaching result of the other operation stations based on the first teaching result of the target operation stations, thereby reducing possible errors.

In an embodiment, the robot is taught for the target operation stations respectively, and for the motion trajectory where each target operation station is located, the method may include following steps.

First, when the robot is respectively located at the target operation station and the preset station on the motion trajectory, position and pose information of the target operation station and the preset station on the motion trajectory is determined respectively.

For ease of description, referring to FIG. 4 again, and taking the operation stations arranged in a two-dimensional array as shown in FIG. 4 as an example for description. In this example, a vertex at an upper left corner of operation station 1 can be taken as an origin **o**. An axis parallel to a narrow side of a plate station may be determined as the X-axis based on the origin **o**. An axis passing through the origin o and perpendicular to the X-axis and parallel to a wide side of the plate position is determined as the Z-axis. An axis passing through the origin o and perpendicular to the X-axis and Z-axis is determined as the Y-axis (not shown). Therefore, the arrangement information of the multiple operation stations may include: x = 2, y = 1, and z = 6.

The robot is a robotic arm and the operation station 1 is a target operation station as an example for description. For the motion trajectory where the target operation station 1 is located, firstly, the robotic arm may be located at a preset station on the motion trajectory. The robotic arm may be manually operated or controlled by a host computer to implement this operation. Then, after a "Get Coordinate" control on the visual interface of the host computer is clicked, the position and pose information of the preset station may be determined and displayed on the visual interface. The position and pose information may include a Cartesian coordinate value of the preset station in the Cartesian coordinate system, specifically, corresponding coordinate values on the X-axis, Y-axis and Z-axis, as well as an Euler angle respectively.

Similarly, for the target operation station 1, the position and pose information of the target operation station 1 may be acquired through the foregoing operation.

Then, an intermediate station located between the target operation station and the preset station on the motion trajectory is determined based on the position and pose information of the target operation station and the position and pose information of the preset station on the motion trajectory.

As described above, the target operation station is taken as a first endpoint on the motion trajectory, such as a start point or an endpoint. When the robotic arm is located at the target operation station as the first endpoint on the motion trajectory, the robotic arm can be moved by any vertical distance towards the preset station to reach the intermediate station. Through the intermediate station, the robotic arm may eventually reach the preset station. For example, when the robotic arm is located at the target operation station 1, and the preset station is located at an upper left of the target operation station 1 in the three-dimensional space, the positions reached by the robotic arm after moved upwards by 20cm and 40cm can be taken as the intermediate stations on the motion trajectory. Thus, the robotic arm can move upward by 20cm from the target operation station 1 to the intermediate station 1, then move upward by 20cm from the intermediate station 1 to the intermediate station 2, and finally move to the left by 15cm from the intermediate station 2 to the preset station.

Finally, when the robot is located at the intermediate station on the motion trajectory, position and pose information of the intermediate station is acquired.

Similarly to acquiring the position and pose information of the preset station and the position and pose information of the target operation station, when the robotic arm is located at the intermediate station on the motion trajectory, the position and pose information of the intermediate station can be acquired by clicking the "Get Coordinate" control on the current visual interface.

According to the above technical solution, the intermediate station and the position and pose information of the intermediate station are determined based on the position and pose information of the target operation station as the first endpoint and the position and pose information of the preset station on the motion trajectory. The method can ensure the accuracy of the motion trajectory of the robot, thereby ensuring smooth execution of the teaching work.

In an embodiment, the visualization interface may further include a switching control. Different target operation stations may be selected in response to an operation of the user on the switching control. For example, a drop-down menu may be displayed in response to an operation of the user on the switching control. All target operation stations may be displayed in the menu. In response to the user clicking different target operation stations among them, position and pose information of different stations on a motion trajectory where different target operation stations are located may be determined, and then teaching is performed for different target operation stations.

In an embodiment, the arrangement information of the operation stations may include index values of the operation stations. The index value is used to indicate the arrangement position of the operation station in the array. The teaching results of the operation stations may include position and pose information of all stations (it can be understood that the station here corresponds to the preset station, the target operation station, and the intermediate station used in teaching) on the motion trajectory where the operation station is located. The position and pose information may include the Cartesian coordinate value, which may include a three-dimensional coordinate value (X, Y, Z), and an Euler angle (RX, RY, RZ).

Referring to FIG. 4 again, the index value of the operation station 1 may be expressed as: x = 1, y = 1, and z = 1. The index value of the operation station 2 may be expressed as: x = 1, y = 1, and z = 2. The index value of the operation station 6 may be expressed as: x = 1, y = 1, and z = 6. The index values of other operation stations may be deduced by analogy.

FIG. 5 shows a schematic flowchart of step S130 according to an embodiment of the present application, in which a second teaching result of the other operation stations different from the target operation stations among the multiple operation stations is acquired based on the first teaching result and the arrangement information of the multiple operation stations. As shown in FIG. 5, the step S130 may further include following steps.

In step S131, an Euler angle in the Cartesian coordinate values of each station on the motion trajectory of the robot is converted into a rotation vector of each station. It can be understood that the motion trajectory passes through the target operation stations. Thus, the motion trajectory is taught in step S120. In other words, position and pose information of all stations on the motion trajectory is known at present.

In an embodiment, for any station on the motion trajectory, for example, the target operation station 1, its Cartesian coordinates may be expressed as $(X1, Y1, Z1, RX1, RY1, RZ1)$. The Euler angle of the target operation station 1 of the robot may be expressed as $Eul = (RX1, RY1, RZ1)$, and its rotation vector $R = (Vx1, Vy1, Vz1)$. For each of the stations on the motion trajectory, an Euler angle may be converted into a rotation vector based on the following formula: the rotation vector $R = eul2rotm(Eul, 'ZYX')$, where 'ZYX' indicates that the robot first rotates around the Z-axis, then rotates around the Y-axis, and finally rotates around the X-axis. Specifically, the rotation mode of the robot may be selected based on different specifications.

In step S132, based on the three-dimensional coordinate value and the rotation vector in the Cartesian coordinate value of each station on the motion trajectory where the target operation station is located, a linear regression formula for each station on the motion trajectory where the other operation stations are located is determined by using a multivariate linear regression method. The linear regression formula may be a formula which involves the three-dimensional coordinate value and the rotation vector in the Cartesian coordinate value of the station and the index values of the station, and the Cartesian coordinate value includes the three-dimensional coordinate value (X, Y, Z) and the Euler angle (RX, RY, RZ).

In an embodiment, the linear regression formula may be determined by using a multivariate gradient descent algorithm, a polynomial regression algorithm, a stochastic gradient descent algorithm, a multivariate linear regression algorithm, and the like. Preferably, the multivariate linear regression algorithm may be selected to determine a linear regression formula and an error analysis result for each station on the motion trajectory where the other operation stations are located in each dimension.

In an embodiment, linear regression calculation is performed based on the first teaching results of the target operation station 1, the target operation station 6 and the target operation station 7 among the operation stations in the two-dimensional array, so that linear regression formulas for other operation stations can be acquired.

Taking the operation station 3 as an example, in the X-axis direction, the linear regression formulas for the operation station 3, the intermediate station and the preset station on the motion trajectory where the operation station 3 is located may be respectively expressed as:

$$X = 49.200000 - 114.700000 * x + 0.006000 * z;$$

$$X = 49.200000 - 114.700000 * x + 0.006000 * z;$$

$$X = 49.210000 - 114.700000 * x + 0.004000 * z;$$

in which x and z may represent index values corresponding to the operation station 3.

In the Y-axis direction, the linear regression formulas for the operation station 3, the intermediate station and the preset station on the motion trajectory where the operation station 3 is located may be respectively expressed as:

$$Y = -407.730000 + 1.130000 * x + 0.020000 * z;$$

$$Y = -407.720000 + 1.140000 * x + 0.012000 * z;$$

$$Y = -241.690000 + 6.070000*x + 5.330000*z;$$

in which x and z may also represent index values corresponding to the operation station 3.

Similarly, in the Z-axis direction, in each direction of each rotation vector, linear regression formulas for the operation station 3, the intermediate station and the preset station on the motion trajectory where the operation station 3 is located may also be determined respectively. In this example, there is only one intermediate station on each motion trajectory.

Similarly, linear regression formulas for all other operation stations except the target operation station may be determined respectively.

The error analysis of the multivariate linear regression algorithm may include an average absolute error MAE, a root mean square error RMSE, a confidence coefficient R2, and the like. The rationality of the three-dimensional coordinate value and the rotation vector in the Cartesian coordinate value of the station on the motion trajectory acquired by teaching for the operation station can be evaluated based on the error analysis result.

In step S133, based on the linear regression formulas and the index values of the other operation stations, the three-dimensional coordinate value and the rotation vector in the Cartesian coordinate value of each station on the motion trajectory where the other operation stations are located are determined.

In an embodiment, the three-dimensional coordinate value and the rotation vector in the Cartesian coordinate value of the station can be acquired by substituting the index values of the station into each linear regression formula.

For example, for the operation station 3, its index values are: x = 1, y = 1, z = 3, and the X value of the Cartesian coordinate is 49.200000-114.700000*1+0.006000*3 = -65.482000. Other position and pose information of the operation station 3, such as, a Y value, a Z value, a rotation vector, and the like, may be similarly calculated based on a corresponding linear regression formula.

In step S134, an Euler angle of each station is determined based on the rotation vector of each station on the motion trajectory where the other operation stations are located.

In an embodiment, the rotation vector determined in step S133 may be converted into the Euler angle based on the formula Eul = rotm2eul (R, 'ZYX'), where 'ZYX' indicates that the robot first rotates around the Z axis, then rotates around the Y axis, and finally rotates around the X axis.

According to the above technical solution, based on the Cartesian coordinate value (the Euler angle needs to be converted into the rotation vector) of each station on the motion trajectory where the target operation station is located, the linear regression formula for each station on the motion trajectory where other operation stations are located is determined by using a multivariate linear regression method. Then the Cartesian coordinate values of the other operation stations are calculated. This method has simple calculation logic, and further improves the efficiency of robot teaching.

According to an embodiment of the present application, when the teaching results of the other operation stations except the target operation station are calculated in step S130, the following conditions may be determined after acquiring the motion trajectory of the target operation station that has been taught. In the case that the following determination conditions are met, the posture of each station of the robot on the motion trajectory where the other operation stations are located is determined. If the following determination conditions are not met, the robot can be manually adjusted until the determination condition is met, and then the robot teaching is performed again.

1) A preset arrangement mode of multiple operation stations is determined. The arrangement mode of the multiple operation stations may be a one-dimensional array or a two-dimensional array.

2) It is determined whether the number of the taught target operation stations corresponds to the preset arrangement mode of the operation stations. In a case that the preset arrangement mode of the operation stations is a one-dimensional array, it is determined whether the preset number is greater than or equal to two. If the preset arrangement mode of the operation stations is a two-dimensional array, it is determined whether the preset number is greater than or equal to three.

3) It is determined whether the selection of the taught target operating station meets a selection rule of target operation stations in the one-dimensional array or the two-dimensional array. In a case that the preset arrangement mode of the operation stations is a one-dimensional array, at least two operation stations located on the same straight line in the one-dimensional array are selected as the target operation stations. In a case that the preset arrangement mode of the operation stations is a two-dimensional array, at least three operation stations that are not collinear are selected as the target operation stations.

4) It is determined whether the number of stations in each of the motion trajectories where the taught target operation stations are located is the same. For example, there are four stations on each motion trajectory.

5) It is determined whether the preset station, that is, a shared station, on the motion trajectory where each target operation station is located is in the same position.

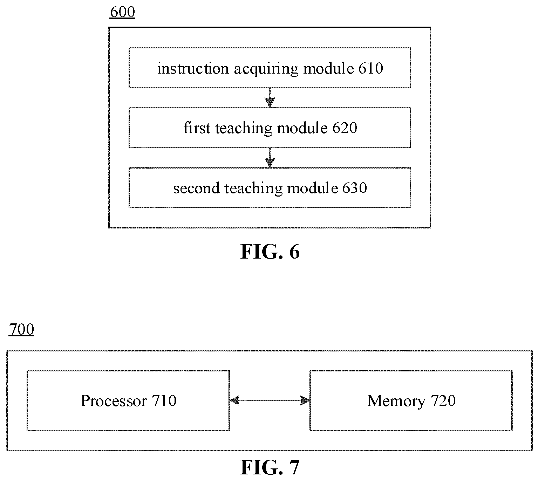

According to another aspect of the present application, a robot teaching apparatus is further provided. FIG. 6 shows a schematic block diagram of a robot teaching apparatus 600 according to an embodiment of the present application. As shown in FIG. 6, the apparatus is configured to teach a robot of which the operation range may cover multiple operation stations, and the multiple operation stations are used to store operation objects. The apparatus 600 may include a determination module 610, a first teaching module 620, and a second teaching module 630.

The instruction acquiring module 610 is configured to determine target operation stations specified by a user. The target operation stations are some of the multiple operation stations, and multiple motion trajectories of the robot all pass through a preset station and take different operation stations among the multiple operation stations as first endpoints.

The first teaching module 620 is configured to teach the robot based on the target operation stations to acquire a first teaching result.

The second teaching module 630 is configured to acquire a second teaching result of other operation stations different from the target operation stations among the multiple operation stations based on the first teaching result and arrangement information of the multiple operation stations.

In an embodiment, the first teaching module 620 may include a first determination sub-module. The first determination sub-module may be configured to determine whether the number of the target operation stations that have finished teaching at present meets a preset number requirement. If the determination result is yes, acquisition of the second teaching result is allowed; otherwise, acquisition of the second teaching result is prohibited.

In an embodiment, the first determination module may further include a second determination sub-module. The second determination sub-module may be configured to determine whether the preset number of target operation stations that have finished teaching are collinear in a case that the preset arrangement mode is a two-dimensional array and the preset number of target operation stations have finished teaching. If the determination result is no, acquisition of the second teaching result is allowed.

In an embodiment, the first teaching module 620 may further include an information determination sub-module. The information determination sub-module may be configured to respectively determine position and pose information of the target operation station and the preset station on the motion trajectory when the robot is respectively located at the target operation station and the preset station on the motion trajectory for the motion trajectory where each target operation station is located. An intermediate station located between the target operation station and the preset station on the motion trajectory is determined based on the position and pose information of the target operation station and the preset station on the motion trajectory. Position and pose information of the intermediate station is acquired when the robot is located at the intermediate station on the motion trajectory.

In an embodiment, the first teaching module 620 may further include a calculation sub-module. The calculation sub-module may be configured to convert an Euler angle in the Cartesian coordinate value of each station on the motion trajectory where the target operation station is located into a rotation vector thereof. Based on the three-dimensional coordinate value and the rotation vector in the Cartesian coordinate value of each station on the motion trajectory where the target operation station is located, linear regression formulas for all stations on the motion trajectory where the other operation stations are located are respectively determined by using a multivariate linear regression method. The linear regression formula may be a formula which involves the three-dimensional coordinate value and the rotation vector in the Cartesian coordinate value of the station and the index values of the station, and the Cartesian coordinate value includes the three-dimensional coordinate value (X, Y, Z) and the Euler angle (RX, RY, RZ). Based on the linear regression formulas and the index values of the other operation stations, the three-dimensional coordinate value and the rotation vector in the Cartesian coordinate value of each station on the motion trajectory where the other operation stations are located are determined. The Euler angle of each station is determined based on the rotation vector of each station on the motion trajectory where the other operation stations are located.

According to another aspect of the present application, an electronic device is further provided. FIG. 7 shows a schematic block diagram of an electronic device 700 according to an embodiment of the present application. As shown in FIG. 7, the electronic device 700 includes a processor 710 and a memory 720. Computer program instructions are stored in the memory 720, and are configured to perform the robot teaching method when they are executed by the processor 710.

According to another aspect of the present application, a storage medium is further provided. The program instructions are stored in the storage medium, and the program instructions are configured to perform the robot teaching method when they are executed. The storage medium may include, for example, a storage component of a tablet computer, a hard disk of a personal computer, a read-only memory (ROM), an erasable programmable read-only memory (EPROM), a portable compact disk read-only memory (CD-ROM), a USB memory, or any combination of the above storage media. The computer-readable storage medium may be any combination of one or more computer-readable storage media.

Those skilled in the art may understand specific implementations of the robot teaching apparatus, the electronic device, and the storage medium by reading the related description related to the robot teaching method, and details are not described here again for brevity.

Although exemplary embodiments have been described herein with reference to the accompanying drawings, it should be understood that the embodiments described above are only exemplary and are not intended to limit the scope of the present application. Various changes and modifications may be made by those skilled in the art without departing from the scope and spirit of the present application. All such changes and modifications are deemed to fall into the scope of the claims of the present application.

Those skilled in the art may realize that the units and algorithm steps of each example described in conjunction with embodiments herein may be implemented by electronic hardware, or a combination of computer software and electronic hardware. Whether the functions are performed by hardware or software depends on the specific applications and design constraints of the technical solution. Those skilled in the art may implement the described functions in different methods for each specific application, but such implementation should not be considered to be beyond the scope of the present application.

It should be understood that the device and method disclosed in the several embodiments of the present application may be implemented in other manners. For example, the device embodiments described above are merely illustrative. For example, the division of the units is only based on logical functions, and there may be other division manners in actual implementation, such as multiple units or components may be combined or integrated into another device, or some features may be ignored or not executed.

In the specification provided herein, numerous specific details are described. However, it can be understood that embodiments of the present application may be practiced without these specific details. In some instances, well-known methods, structures, and techniques are not shown in detail to avoid obscuring understanding of this specification.

Similarly, it should be understood that in order to simplify the present application and to help to understand one or more of the various aspects of the present application, in the description of the exemplary embodiments of the present application, various features of the present application are sometimes grouped together into a single embodiment, figure, or description thereof. However, the method of the present application should not be construed as reflecting an intention that the claimed application requires more features than those explicitly stated in each claim. More specifically, as reflected in the corresponding claims, the inventive point lies in that the corresponding technical problem can be solved with features fewer than all the features in a single disclosed embodiment. Thus, the claims following the detailed description are hereby expressly incorporated into the detailed description, wherein each claim itself serves as an independent embodiment of the present application.

It can be understood by those skilled in the art that, except for mutually exclusive features, all features disclosed in this specification (including the appended claims, abstract, and accompanying drawings) and all processes or units of any method or device disclosed in this specification may be combined in any way. Unless otherwise explicitly stated, each of the features disclosed in this specification (including the appended claims, abstract, and accompanying drawings) may be replaced by an alternative feature that provides the same, equivalent, or similar purpose.

Moreover, it may be understood by those skilled in the art that although some embodiments described herein include certain features included in other embodiments rather than other features, the combinations of features of different embodiments are meant to be within the scope of the present application and form different embodiments. For example, in the claims, any one of the claimed embodiments may be used in any combination.

Various component embodiments of the present application may be implemented in hardware, or in software modules operating on one or more processors, or in a combination thereof. Those skilled in the art should understand that a microprocessor or a digital signal processor (DSP) may be used in practice to implement some or all of the functions of some modules of the robot teaching apparatus according to the embodiments of the present application. The present application may also be implemented as a device program (e.g. a computer program and a computer program product) for performing a portion or all of the methods described herein. Such a program implementing the present application may be stored in a computer-readable medium, or may be in a form of one or more signals. Such a signal may be downloaded from an Internet website, provided on a carrier signal, or provided in any other form.

It should be noted that the above embodiments illustrate rather than limit the present application, and that alternative embodiments may be devised by those skilled in the art without departing from the scope of the appended claims. In the claims, any reference numerals located between parentheses shall not be construed as a limitation on the claims. The word "comprising" does not exclude the presence of elements or steps not listed in the claims. The word "a" or "an" preceding an element does not exclude the presence of multiple such elements. The present application may be implemented by means of hardware comprising several different elements and by means of a suitably programmed computer. In a unit claim listing several devices, some of these devices may be embodied by a same hardware item. The use of the words "first", "second", and "third", etc. does not indicate any order. These words may be interpreted as names.

The foregoing descriptions are merely specific embodiments of the present application or explanations of specific embodiments. The protection scope of the present application is not limited thereto, and any changes or substitutions made by those skilled in the art within the technical scope disclosed in the present application should be deemed to fall into the protection scope of the present application. The protection scope of the present application is based on the protection scope of the claims.

**Claims**

1. A robot teaching method, wherein the method is used for teaching a robot of which an operation range covers a plurality of operation stations, and, the plurality of operation stations are used to store operation objects, and the method comprises:

   determining target operation stations specified by a user, wherein the target operation stations are some of the plurality of operation stations, and a plurality of motion trajectories of the robot all pass through a preset station and take different operation stations among the plurality of operation stations as first endpoints;
   teaching the robot to acquire a first teaching result based on the target operation stations; and
   acquiring a second teaching result of the other operation stations different from the target operation stations among the plurality of operation stations based on the first teaching result and arrangement information of the plurality of operation stations.

2. The method according to claim 1, wherein when acquiring the second teaching result of the other operation stations different from the target operation stations among the plurality of operation stations, the method further comprises:
   determining whether the number of the target operation stations that have been finished teaching at present meets the requirement of a preset number, if yes, acquisition of the second teaching result is allowed; otherwise, acquisition of the second teaching result is prohibited.

3. The method according to claim 2, wherein the preset number is determined in advance based on a preset arrangement mode indicated by the arrangement information of the plurality of operation stations.

4. The method according to claim 3, wherein

   when the preset arrangement mode is a one-dimensional array, the preset number is greater than or equal to two;

   when the preset arrangement mode is a two-dimensional array, the preset number is greater than or equal to three.

5. The method according to claim 4, wherein the preset arrangement mode is a one-dimensional array, the target operation stations at least comprise two operation stations located at two ends of the one-dimensional array.

6. The method according to claim 4, wherein the preset arrangement mode is a two-dimensional array and teaching has been performed for the preset number of target operation stations, the method further comprises:
   determining whether the preset number of target operation stations that have finished teaching are collinear, if no, acquisition of the second teaching result is allowed; if yes, acquisition of the second teaching result is prohibited.

7. The method according to claim 6, wherein the preset arrangement mode is a two-dimensional array, the target operation stations at least comprise three of the four operation stations respectively located at an upper left corner, a lower left corner, an upper right corner and a lower right corner of the two-dimensional array.

8. The method according to any one of claims 1 to 7, wherein that teaching the robot for the target operation stations respectively to acquire the first teaching result comprises:

   for the motion trajectory where each target operation station is located,
   respectively determining position and pose information of the target operation station and the preset station on the motion trajectory when the robot is located at the target operation station and the preset station on the motion trajectory;
   determining an intermediate station located between the target operation station and the preset station on the motion trajectory based on the position and pose information of the target operation station and the preset station on the motion trajectory; and
   acquiring position and pose information of the intermediate station when the robot is located at the intermediate station on the motion trajectory.

9. The method according to any one of claims 1 to 7, wherein the arrangement information of the plurality of operation stations comprises index values of the plurality of operation stations, the teaching results of the plurality of operation stations comprise position and pose information of all stations on the motion trajectory where the operation station is located, and the position and pose information comprises a Cartesian coordinate value;

that acquiring the second teaching result of the other operation stations different from the target operation stations among the plurality of operation stations based on the first teaching result and the arrangement information of the plurality of operation stations, comprising:

converting an Euler angle in the Cartesian coordinate value of each station on the motion trajectory where the target operation stations are located into a rotation vector thereof;

based on the three-dimensional coordinate value and the rotation vector in the Cartesian coordinate value of each station on the motion trajectory where the target operation station is located, determining a linear regression formula for each station on the motion trajectory where the other operation stations are located by using a multivariate linear regression method, and the linear regression formula involves the three-dimensional coordinate value and the rotation vector in the Cartesian coordinate value of the station and the index values of the station;

based on the linear regression formulas and the index values of the other operation stations, determining three-dimensional coordinate value and a rotation vector in Cartesian coordinate values of each station on the motion trajectory where the other operation stations are located; and

determining an Euler angle of each station based on the rotation vector of each station on the motion trajectory where the other operation stations are located.

10. A robot teaching apparatus, wherein the apparatus is configured to teach a robot of which an operation range may cover multiple operation stations and, and the multiple operation stations are used to store operation objects, and the apparatus comprises:

a determination module for determining target operation stations specified by a user, wherein the target operation stations are some of the plurality of operation stations, and a plurality of motion trajectories of the robot all pass through a preset station and take different operation stations among the plurality of operation stations as first endpoints;

a first teaching module for teaching the robot to acquire a first teaching result based on the target operation stations; and

a second teaching module for acquiring a second teaching result of other operation stations different from the target operation stations among the plurality of operation stations based on the first teaching result and arrangement information of the plurality of operation stations.

11. An electronic device, comprising a processor and a memory, wherein computer program instructions are stored in the memory, and are configured to perform the robot teaching method according to any one of claims 1 to 9 when they are executed by the processor.

12. A storage medium, wherein program instructions are stored in the storage medium, and are configured to perform the robot teaching method according to any one of claims 1 to 9 when they are executed.

100

S110 | determining target operation stations specified by a user, in which the target operation stations are some of a plurality of operation stations, and a plurality of motion trajectories of a robot pass through a preset station and take different operation stations among the plurality of operation stations as first endpoints

S120 | teaching the robot to acquire a first teaching result based on the target operation stations

S130 | according to the first teaching result and arrangement information of the plurality of operation stations, acquiring a second teaching result of the other operation stations different from the target operation stations among the plurality of operation stations

**FIG. 1**

S130

S1 | determining whether the number of target operation stations that have finished teaching at present meets the requirement of a preset number

S2 | If yes, acquisition of the second teaching result is allowed; otherwise, acquisition of the second teaching result is prohibited

**FIG. 2**

**FIG. 3**

**FIG. 4**

S130

S131 | converting an Euler angle in the Cartesian coordinate value of each station on the motion trajectory of the robot into a rotation vector of each station

S132 | based on the three-dimensional coordinate value and the rotation vector in the Cartesian coordinate value of each station on the motion trajectory where the target operation station is located, determining a linear regression formula for each station on the motion trajectory where the other operation stations are located by using a multivariate linear regression method, where the linear regression formula involves a three-dimensional coordinate value and the rotation vector in the Cartesian coordinate value of the station and the index values of the station, and the Cartesian coordinate value includes the three-dimensional coordinate value (X, Y, Z) and the Euler angle (RX, RY, RZ)

S133 | based on the linear regression formulas and the index values of the other operation stations, determining a three-dimensional coordinate value and a rotation vector in Cartesian coordinate value of each station on the motion trajectory where the other operation stations are located

S134 | determining the Euler angle of each station based on the rotation vector of each station on the motion trajectory where the other operation stations are located

**FIG. 5**

600

instruction acquiring module 610

first teaching module 620

second teaching module 630

**FIG. 6**

700

Processor 710 ◄────► Memory 720

**FIG. 7**

## INTERNATIONAL SEARCH REPORT

| | International application No. |
|---|---|
| | **PCT/CN2022/134760** |

**A.    CLASSIFICATION OF SUBJECT MATTER**

B25J 9/00(2006.01)i

According to International Patent Classification (IPC) or to both national classification and IPC

**B.    FIELDS SEARCHED**

Minimum documentation searched (classification system followed by classification symbols)

IPC:B25J

Documentation searched other than minimum documentation to the extent that such documents are included in the fields searched

Electronic data base consulted during the international search (name of data base and, where practicable, search terms used)

CNTXT, ENTXT, DWPI, CNKI: 机器人, 多, 工位, 工作台, 示教, 教学, 教导, 数量, 个数, robot, manipulat+, multi+, work+, station, table, platform, teach+, number, amount, count

**C.    DOCUMENTS CONSIDERED TO BE RELEVANT**

| Category* | Citation of document, with indication, where appropriate, of the relevant passages | Relevant to claim No. |
|---|---|---|
| X | CN 114260908 A (RVBUST INC.) 01 April 2022 (2022-04-01) <br> description, paragraphs 2-158, and figures 1-7 | 1, 10-12 |
| A | CN 113894800 A (ROBOTMETA TECHNOLOGY CO., LTD., SHENZHEN) 07 January 2022 (2022-01-07) <br> entire document | 1-12 |
| A | CN 107598922 A (LEETRO AUTOMATION CO., LTD.) 19 January 2018 (2018-01-19) <br> entire document | 1-12 |
| A | CN 111890336 A (CHENGDU AIRCRAFT INDUSTRIAL (GROUP) CO., LTD.) 06 November 2020 (2020-11-06) <br> entire document | 1-12 |
| A | JP H07114408 A (MATSUSHITA ELECTRIC INDUSTRIAL CO., LTD.) 02 May 1995 (1995-05-02) <br> entire document | 1-12 |
| A | KR 20190048589 A (THE INDUSTRY & ACADEMIC COOPERATION IN CHUNGNAM NATIONAL UNIVERSITY) 09 May 2019 (2019-05-09) <br> entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 June 2023** | **15 July 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2022/134760** |

| Patent document cited in search report | | | Publication date (day/month/year) | Patent family member(s) | | | Publication date (day/month/year) |
| --- | --- | --- | --- | --- | --- | --- | --- |
| CN | 114260908 | A | 01 April 2022 | None | | | |
| CN | 113894800 | A | 07 January 2022 | None | | | |
| CN | 107598922 | A | 19 January 2018 | None | | | |
| CN | 111890336 | A | 06 November 2020 | None | | | |
| JP | H07114408 | A | 02 May 1995 | JP | 3208467 | B2 | 10 September 2001 |
| KR | 20190048589 | A | 09 May 2019 | KR | 102001214 | B1 | 01 October 2019 |

Form PCT/ISA/210 (patent family annex) (July 2022)

## REFERENCES CITED IN THE DESCRIPTION

**Patent documents cited in the description**

- CN 202211376272